# EUROPEAN PATENT APPLICATION

(11) **EP 1 793 335 A1**
(43) Date of publication of application: **06.06.2007**
(21) Application number: 05111709.1
(22) Date of filing: 05.12.2005
(51) Int. Cl.: G06Q 10/00

(54) **Consolidation of Shipments Via Consolidation Locations**

(71) Applicant: SAP AG, 69190 Walldorf (DE)
(72) Inventor: von Helmolt, Hans-Ulrich, 69126 Heidelberg (DE); Kreuels, Carsten, 66497 Contwig (DE); Schick, Wolfram, 76137 Karlsruhe (DE)
(74) Representative: Schneider, Günther Martin

(57) **Abstract**

A computer-implemented method for managing the delivery of ordered products from at least one supplier location to a customer via at least one consolidation location with a supply chain management system, whereby availability of the ordered products is checked based on a plurality of ATP rules, the ATP rules comprising the at least one supplier location which is to be checked for availability of the ordered products, wherein at least one ATP rule further defines the at least one consolidation location, and whereby the at least one consolidation location is selected from the at least one ATP rule and checked for availability of the ordered products.

## Description

### BACKGROUND OF THE INVENTION

The present invention relates to methods and systems for managing products within e-business systems. More particularly, the present invention relates to methods and systems for optimizing the delivery process of ordered products from a supplier to a customer via a consolidation location within a supply chain management system. Today, the success of a business company depends essentially on the requirement that customer demands on goods and/or services be fulfilled precisely, cost-efficiently and in time. Therefore, many companies make use of a supply chain management system to control and optimize their production and delivery processes.

Supply chain management may comprise the process of coordinating the flow of goods, services, information and/or finances between the involved parties such as manufactures, suppliers, wholesalers, retailers, and consumers. This process may include, among others, order processing, information feedback, and timely delivering the ordered goods and/or services.

### STATE OF THE ART

One process within supply chain management is the check as to whether a quantity of products (ordered by a customer) is available at some location (e.g., warehouses, production plants) at a given time. This is denoted in the following as Available-to-Promise (ATP) check. The various ways to select particular locations and to check these locations as to availability of the quantity of products may be defined in a number of rules. In the following, these rules are denoted as ATP rules. The rules to be applied may be determined based on the particular order which is to be ATP checked.

Sometimes the whole quantity of products is found to be available only at several locations taken together. Then, the products may be shipped from these locations directly to the customer.

In some cases, however, it is desired to ship the products to a particular location where they are processed in a certain way, before they are shipped to the customer. This process is denoted in the following a consolidation process. A reason for that may be the need to send the ordered products with just one delivery to the customer. A further reason may be foreign trade or export business, for example, if only a particular location has the capability to prepare export licenses.

### SUMMARY OF THE INVENTION

In general, in one aspect, this invention provides a computer-implemented method for managing the delivery of ordered products from at least one supplier location to a customer via at least one consolidation location with a supply chain management system, whereby availability of the ordered products is checked based on a plurality of ATP rules, the ATP rules comprising the at least one supplier location which is to be checked for availability of the ordered products, wherein at least one ATP rule further defines the at least one consolidation location, and whereby the at least one consolidation location is selected from the at least one ATP rule and checked for availability of the ordered products.

Further embodiments of the invention can comprise the following features. The ATP rules further comprise at least one consolidation location which is excluded from the availability check.

The excluded consolidation location may have a plurality of validity periods which define the validity of the exclusion.

The ATP rules may further comprise at least one alternative consolidation location with respect to at least one excluded consolidation location.

The selected consolidation location may be replaced by an externally specified consolidation location.

Furthermore, the ATP rules may comprise alternative products for the ordered products.

In one embodiment of the invention the ATP rules further comprise a result correlation flag indicating as to whether or not a delivery date correlation of the products to be delivered from the at least one consolidation location to the customer is to be performed at the at least one consolidation location.

The computer-implemented method comprises:
a step of determining at least one ATP rule out of the plurality of ATP rules;
a step of performing an availability check according to the determined
at least one ATP rule.

Furthermore, the computer-implemented method may comprise:
a step of creating at least one stock transfer order which triggers transfer of the products from the at least one supplier location to the at least one consolidation location; and
a step of performing a delivery date correlation at the at least one consolidation location.

The step of determining the at least one ATP rule may be performed based on a set of definable parameters.

The step of performing an availability check may comprise:
a sub-step of performing an availability check according to the selected at least one consolidation location or according to the externally specified consolidation location;
a sub-step of performing a product replacement within the at least one consolidation location;
a sub-step of performing an availability check according to the at least one alternative consolidation location;
a sub-step of performing a product replacement at the at least one alternative consolidation location;
a sub-step of performing an availability check according to the supplier locations; and
a sub-step of performing a product replacement within the supplier locations.

The sub-step of performing an availability check according to the selected at least one consolidation locations or according to the external consolidation location may be performed as first sub-step.

In a second aspect of this invention, an apparatus comprising
a data storage device which stores a plurality of ATP rules, a plurality of supplier locations and a plurality of consolidation locations; and means for performing an availability check is provided.

The means for performing an availability check may be adapted to perform the following steps:
determining at least one ATP rule;
performing an availability check according to the determined ATP rules;
creating at least one stock transfer order which triggers the transfer of the products from the at least one supplier location to the at least one consolidation location; and
performing a result correlation at the at least one consolidation location.

Furthermore, the invention comprises a computer-readable medium comprising computer-executable instructions for performing the inventive method, when loaded into a computer system.

The present invention is linked with many advantages.

Consolidation offers more flexibility in defining the consolidation location. The consolidation location can be freely defined in the ATP rule. Furthermore, the provided method is more user-friendly because the consolidation location is directly visible in the ATP rule.

A further advantage is the possibility of combining consolidation with product substitution. Validities can be assigned to the consolidation location. Also alternative locations may be defined for the consolidation location.

### BRIEF DESCRIPTION OF DRAWINGS

The accompanying drawings, which constitute a part of this disclosure, illustrate various embodiments and aspects of the present invention and, together with the description, explain the principles of the invention.

In the drawings:
- Fig. 1: illustrates an embodiment of an exemplary delivery process via a consolidation location;
- Fig. 2a, 2b, 2c: illustrates a scheduling process for consolidation;
- Fig. 3a, 3b, 3c: illustrates a scheduling process for consolidation considering two consolidation locations;
- Fig. 4: illustrates a data structure according to Fig. 3a and Fig. 3b; and
- Fig. 5: illustrates a program flow of the inventive method.

### DETAILED DESCRIPTION

According to the invention, the consolidation location to be used for particular orders is either automatically defined in the ATP rules or manually entered. If a consolidation location is closed or unavailable because of maintenance or natural disasters, alternative consolidation locations may be used within the delivery process.

According to the invention, the determination of the ATP rules to be applied within an ATP check is done based on a plurality of parameters, for example customer or order fields. The ATP rules may further define alternative products for ordered products which are temporarily not available, or for ordered products for which only successor products are available. Furthermore, the ATP rules may define alternative product locations, e.g., if a product is not available at a first given location. In the following, these alternative locations are denoted location replacements. In this way, the consolidation locations may be freely defined according to different business requirements, and the delivery of products may be better optimized.

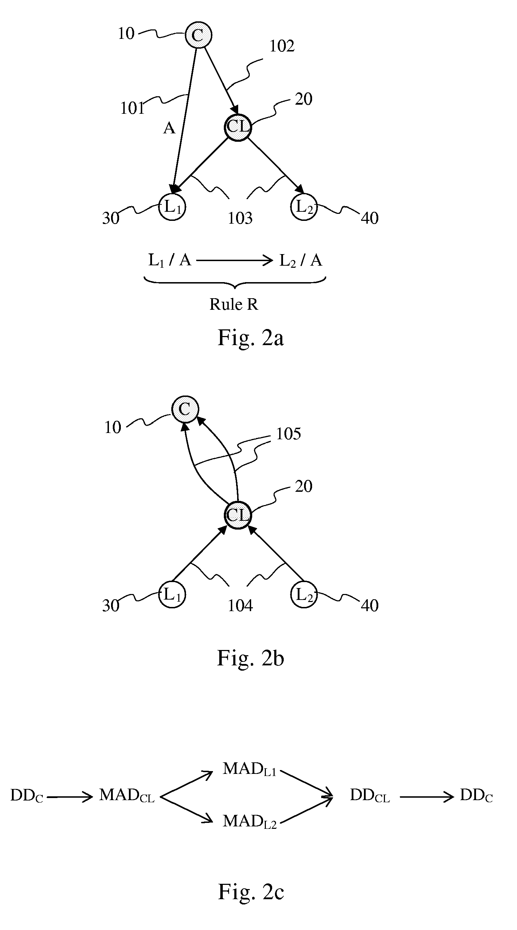

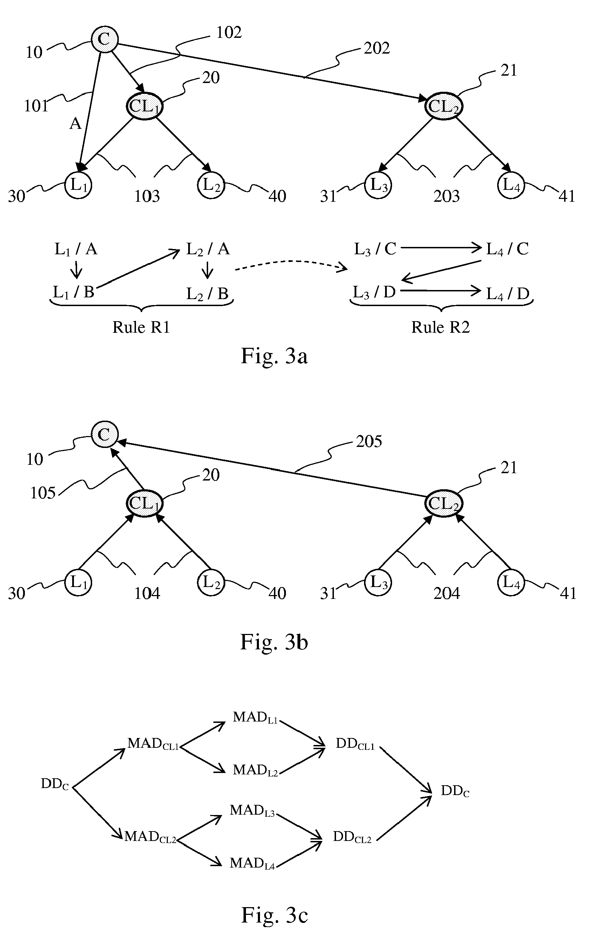

The ATP rules may further comprise a flag indicating whether or not a delivery date correlation has to be done at the consolidation location. Delivery date correlation will be explained below in connection with Figs. 2 and 3.

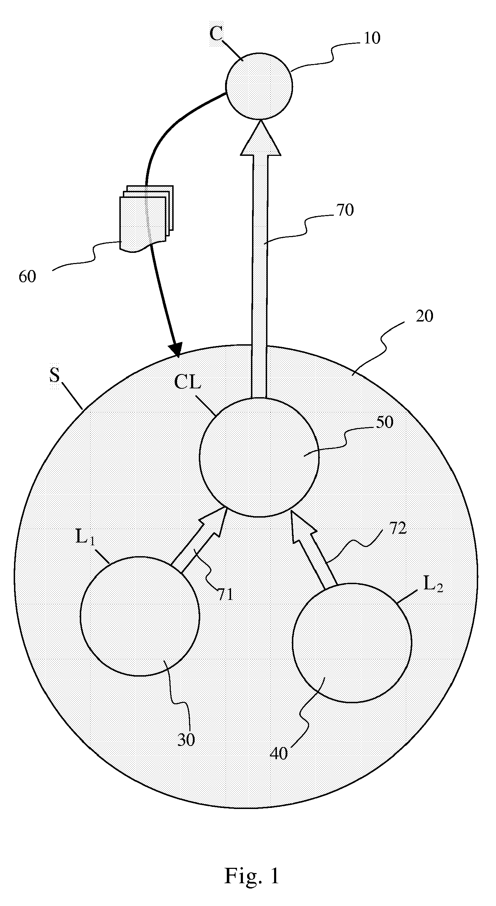

Fig. 1 illustrates an exemplary order-and-delivery process via a consolidation location. Customer 10 sends an order 60 to supplier 20. The order 60 may be in the form of an electronic order transmitted by email or a traditional order transmitted by mail. The order 60 comprises information about the ordered products and the ordered quantity of products. Supplier 20 feeds the data about the order 60 into the supply chain management system which processes this order 60.

Within the supply chain management system an ATP check with respect to the ordered products is performed. In the example, the product locations 30 and 40 are identified as product locations where the ordered quantity of products are available, whereby each of the product locations 30 and 40 can provide a part of the products according to the customer order 60. These parts are shipped as two partial deliveries 71 and 72 from the product locations 30 and 40 to the consolidation location 50.

At the consolidation location 50, these two partial deliveries 71 and 72 are processed according several predefined requirements. These requirements may comprise preparing export licenses or transport documents. From the consolidation location 50, the products are either shipped as one or several deliveries to the customer 10, depending on the flag for delivery date correlation. The details of the order-and-delivery process with consolidation are illustrated by taking reference to Fig. 2.

Fig. 2a illustrates the first part of the scheduling process. Customer 10 enters an order for a certain quantity of products of type A. The input location, i.e. the location which has received the customer order, is the product location L₁ 30. The input of the customer order triggers an ATP check for the ordered quantity of product A. Within the ATP check, an ATP rule R is determined for product A and the product location L₁ 30. This ATP rule R contains the location replacements L₁ 30 and L₂ 40. A location replacement specifies by which location a particular location is replaced in case the particular location cannot provide the quantity of products according to the order.

In this example, during the ATP check, the product location L₁ 30 is replaced by the product location L₂ 40 if the required quantity of products cannot be confirmed completely at product location L₁ 30.

In one embodiment of the invention, the ATP rules which are to be applied for a particular order may be determined using a condition technique. The condition technique provides means for selecting a set of ATP rules according to a plurality of parameters (customer and order data). The ATP rule R additionally contains the consolidation location CL 20. Since the consolidation location is defined within the ATP rule, the consolidation location may depend on various customer and order related properties.

A consolidation process is performed if a consolidation location is either manually entered or specified in the ATP rule to be applied. Thus, the consolidation process may be triggered by customer and order related properties. This means, that consolidation may be performed for example for a specific product, customer, order type or a specific customer profile.

In a first scheduling step 101 the material availability date is calculated out of the delivery date at which the delivery to the customer should take place. The material availability date is the date on which the product must be available the latest. At this date the latest, a vendor must start the activities relevant for delivery, such as picking and packing the products. This step is carried out by default before any possibly defined ATP rule is evaluated.

Then the ATP rules are evaluated in order to determine the product locations L₁ 30 L₂ 40 and the consolidation location CL 20.

Since the consolidation location CL 20 has been determined within the rules evaluation, the second scheduling step 102 has to be carried out followed by checking availability of the product A. The consolidation location is always checked first for availability of ordered products. The reason for checking the consolidation location 20 first is, that from a business point of view it is reasonable to check first the consolidation location 20 from where the ordered products are shipped directly to the customer 10 and not to check first other locations 30 and 40 from where the products first have to be transferred to the consolidation location. In the second scheduling step 102 the material availability date of the consolidation location CL 20 is calculated based on the above mentioned delivery date.

After the scheduling step 102, a further scheduling step 103 for each product location 30, 40 determined within the ATP-rules evaluation has to be done, in which the material availability date for the product locations 30 and 40 is calculated from the material availability date calculated in step 102.

Now the product locations 30, 40 and the consolidation location 20 can be checked for availability of the ordered products. The result of this ATP check can be a plurality of confirmed material availability dates, whereby the result of each product location may consist of several confirmed material availability dates. After the availability check, the confirmed material availability dates of the product locations 30, 40 have to be scheduled to the customer 10 via the consolidation location 20. This leads to Fig. 2b.

Fig. 2b shows the second part of the scheduling process of the consolidation process. In this second part, for the product location 30 and 40 the delivery dates for the consolidation location 20 are calculated from the confirmed material availability dates. This calculation is done within scheduling steps 104. Products having the same delivery date in the consolidation location 20 are merged into one result whereby the quantities of the products are added together.

Furthermore, products which have different delivery dates are merged into one result if the above mentioned delivery date correlation flag in the corresponding ATP rule is set. In this case, the determined delivery dates are moved to the latest one. However, if the above mentioned delivery date correlation flag is not set, no delivery date correlation in the consolidation location is performed. In this case each product is independently scheduled from the consolidation location to the customer.

Within the next scheduling steps 105, the delivery dates for the customer 10 are calculated from the delivery dates of the consolidation location 20. In Fig. 2c, the sequence of the calculations is shown, whereby MADₓ represents the material availability date at location x and DDₓ represents the delivery date at location x.

In the following table 1 a numerical example according to Fig. 2a and Fig. 2b is given assuming transportation times of 3 and 2 days from L₁ and L₂ respectively to CL and 2 days from CL to the customer.

**Table 1**

| Product / Location | MAD | Confirmed MAD | Confirmed quantity | DD in consolidation location | DD at customer |
|---|---|---|---|---|---|
| A / L₁ | 01.11.2005 | 01.11.2005 | 10 | 04.11.2005 | 06.11.2005 |
| | | 03.11.2005 | 5 | 06.11.2005 | 08.11.2005 |
| A/L₂ | 02.11.2005 | 02.11.2005 | 15 | 04.11.2005 | 06.11.2005 |
| | | 06.11.2005 | 20 | 08.11.2005 | 10.11.2005 |

If the ordered products have to be delivered with just one delivery from the consolidation location 20 to the customer 10, then all confirmed delivery dates at the consolidation location 20 are correlated to the latest date (08.11.2005) and then are scheduled to the customer 10 (10.11.2005). Then new material availability dates at the product locations 30, 40 are calculated backwards out of the latest delivery date at the consolidation location 20 (08.11.2005).

Fig. 3a and Fig. 3b illustrate a scheduling process for a consolidation process relating to two consolidation locations. Fig. 3a illustrates the first part of the scheduling process as described in Fig. 2a. Fig. 3b illustrates the second part of the scheduling process as described in Fig. 2b.

Customer 10 orders product A in location L₁ 30. In the first scheduling step 101, the material availability date for the product location 30 is determined. After scheduling step 101, the ATP rules are determined and evaluated in order to determine the consolidation locations. Hereby, ATP rule R1 is determined, and the evaluation returns a plurality of substitution requirements, whereby L₁/A → L₁/B describes a product replacement at location L₁, and L₁/B → L₂/A describes a product and location replacement, and L₂/A → L₂/B describes a product replacement within location L₂. In addition to these substitution requirements, the evaluation returns the requirements CL₁/A and CL₁/B.

In the second scheduling step 102, the material availability dates for the products A and B in the consolidation location 20 (CL₁/A, CL₁/B) are determined as described in Fig. 2a. In the following third scheduling steps 103, the material availability dates for the products A and B in the product location L₁ and L₂ (L₁/A, L₁/B, L₂/A, L₂/B) are determined. Now availability of the products in each location can be checked.

After the availability has been checked, the scheduling steps 104 and 105 (Fig. 3b) are performed as described in Fig. 2b, in order to determine the delivery dates for the consolidation location 20 and the customer 10.

If there is still remaining quantity after this availability checks, a second ATP rule R2 is determined and the evaluation returns further substitution requirements, whereby L₃/C → L₄/C describes a location replacement, L₄/C → L₃/D describes a product und location replacement and L₃/D → L₄/D describes a location replacement. In addition to these substitution requirements, the evaluation returns the requirements CL₂/C and CL₂/D. The material availability dates for the products C and D are determined according the following sequence:
CL₂/C → L₃/C → L₄/C → CL₂/D → L₃/D → L₄/D.

This means that at first the material availability dates for all locations with respect to the product C are determined and afterwards the material availability dates for all locations with respect to the product D.

Finally, the scheduling steps 204 and 205 (Fig. 3b) are performed, in order to determine the delivery dates for the consolidation location 21 and the customer 10.

In Fig. 3c, the sequence of the calculations is shown, whereby MADₓ is representing the material availability date in location x and DDₓ is representing the delivery date in location x.

In the following tables 2 to 5 an example according to Fig. 3a and Fig. 3b is given.

**Table 2**

| Product / Location | Confirmed MAD | Confirmed quantity | | Product / Location | Confirmed MAD | Confirmed quantity |
|---|---|---|---|---|---|---|
| A / L₁ | 01.11.2005 | 10 | | C / L₃ | 02.11.2005 | 10 |
| | 03.11.2005 | 5 | | | 05.11.2005 | 5 |
| A / L₂ | 01.11.2005 | 15 | | C / L₄ | 07.11.2005 | 15 |
| | 05.11.2005 | 20 | | D / L₃ | 08.11.2005 | 10 |
| B / L₁ | 05.11.2005 | 10 | | D / L₄ | 08.11.2005 | 20 |

**Table 3**

| Product / Location | Confirmed MAD | Confirmed quantity Product / Location | | | Confirmed MAD | Confirmed quantity |
|---|---|---|---|---|---|---|
| A / CL₁ | 03.11.2005 | 25 C / CL₂ | | | 04.11.2005 | 10 |
| | 05.11.2005 | 5 | | | 07.11.2005 | 5 |
| | 07.11.2005 | 20 | | | 09.11.2005 | 15 |
| B / CL₁ | 07.11.2005 | 10 D / CL₂ | | | 10.11.2005 | 30 |

**Table 4**

| Product / Location | Confirmed MAD | Confirmed quantity | DD in consolidation location | DD at customer | Correlated DD at customer |
|---|---|---|---|---|---|
| A / CL₁ | 03.11.2005 | 25 | 06.11.2005 | 08.11.2005 | 12.11.2005 |
| | 05.11.2005 | 5 | 08.11.2005 | 10.11.2005 | 12.11.2005 |
| | 07.11.2005 | 20 | 10.11.2005 | 12.11.2005 | 12.11.2005 |
| B / CL₁ | 07.11.2005 | 10 | 10.11.2005 | 12.11.2005 | 12.11.2005 |
| C / CL₂ | 04.11.2005 | 10 | 07.11.2005 | 09.11.2005 | 15.11.2005 |
| | 07.11.2005 | 5 | 10.11.2005 | 12.11.2005 | 15.11.2005 |
| | 09.11.2005 | 15 | 12.11.2005 | 14.11.2005 | 15.11.2005 |
| D / CL₂ | 10.11.2005 | 30 | 13.11.2005 | 15.11.2005 | 15.11.2005 |

**Table 5**

| Product / Location | Correlated DD at customer | Confirmed quantity |
|---|---|---|
| A / CL₁ | 12.11.2005 | 50 |
| B / CL₁ | 12.11.2005 | 10 |
| C / CL₂ | 15.11.2005 | 30 |
| D / CL₂ | 15.11.2005 | 30 |

Table 2 shows the confirmed material availability dates (MAD) for each product/location. Table 3 shows the merged results according to the Table 2 whereby products having the same MAD are merged into one result in the consolidation location, for example, A/L1 (01.11.2005) and A/L2 (01.11.2005) are merged into A/CL1 (01.11.2005) and the quantities are added together (10 + 15 = 25). Table 4 shows the delivery dates (DD) in the consolidation location and at the customer according to Table 3. The last column contains the correlated delivery date for each row. Finally, Table 5 shows the correlated delivery date at customer according to the Table 4.

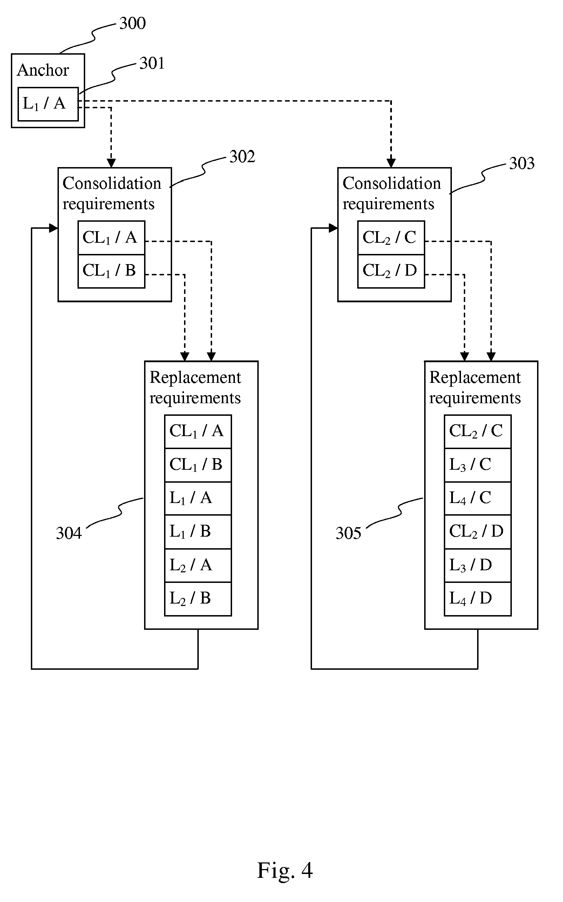

Fig. 4 shows a data structure which is used in the inventive method. The data structure is build according the data shown in Fig. 3a and Fig. 3b. First, the inventive method creates an anchor requirement group 300 comprising the input location product (L₁/A) 301. Then, the data structure is build according to the first determined ATP rule R1. A consolidation requirement group 302 is created containing only the requirements (CL₁/A, CL₁/B) for the consolidation location, i.e., all combinations between the consolidation location and the product replacements of the ATP rule R1. In this embodiment, product A may be replaced by product B and therefore the consolidation requirement group 302 need to have the requirements CL₁/A and CL₁/B. This consolidation requirement group 302 is attached as a successor (dashed arrow) to the input location 301 of the anchor requirement group 300.

The consolidation requirement group 302 is not checked for availability. Therefore a third requirement group, the replacement requirement group 304, is created comprising the new requirements coming out of the ATP rule R1 (CL₁/A, CL₁/B, L₁/A, L₁/B, L₂/A, L₂/B). This replacement requirement group 304 is attached as successor (dashed arrows) to every requirement (CL₁/A, CL₁/B) of the consolidation requirement group 302. Now the calculation of the material availability dates for the requirements L₁/A, L₁/B, L₂/A, and L₂/B under consideration of the consolidation location CL1 is performed and availability is checked. The whole consolidation requirement group 302 is attached as predecessor (solid arrow) to the replacement requirement group 304. Thereby the predecessor consolidation requirement group 302 can be found and the correlated and scheduled results of the replacement requirement group 304 can be attached to the corresponding consolidation requirements (CL₁/A, CL₁/B). "Scheduled" means that the confirmation dates in the consolidation location are determined from the confirmation dates of the product locations. "Corresponding" means that they have the same product, i.e., the results of all replacement requirements with the same product are correlated and attached to the consolidation location with this product, for example the replacement requirements L₁/A, and L₂/A are attached to the consolidation requirement CL₁/A and the replacement requirements L₁/B, and L₂/B are attached to the consolidation requirement CL₁/B.

Now the consolidation requirement group 303 and the replacement requirement group 305 are created according to the second ATP rule R2, and attached to the existing data structure as described above.

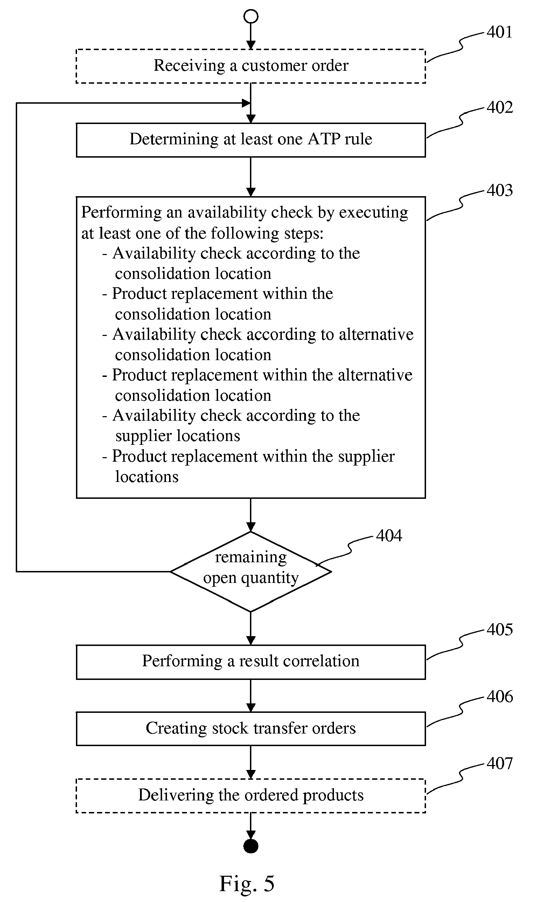

Fig. 5 gives an overview of the program flow according to the inventive method. The process starts upon receiving a customer order 401 comprising at least a product and the ordered quantity of this product.

In second step 402 at least one ATP rule is determined according to the data of the customer order. In one embodiment a plurality of such ATP rules may be defined. This step 402 comprises also the evaluation of the determined ATP rules. Within this evaluation the consolidation location is selected and the product replacements and the location replacements are determined.

The next step 403 is performed according to the results of the evaluation in step 402. In step 403 an availability check for the ordered products is performed. During the availability check at least one of the following sub methods is performed:
- Checking availability according to the consolidation location;
- Performing a product replacement for the consolidation location;
- Checking availability according to an alternative consolidation location;
- Performing a product replacement for the alternative consolidation location;
- Checking availability according to the supplier locations;
- Performing a product replacement for the supplier locations.

If more then one of these sub methods have to be performed, than the sequence of the sub methods depends on the results of the evaluation of step 402, whereby the sub method 'checking availability according to the consolidation location' is performed as first sub method. The reason for checking availability first according to the consolidation location is that if a consolidation has to be performed in the consolidation location, for the products which can be confirmed by the availability check in the consolidation location no stock transfer has to be carried out.

In one embodiment, the ATP rules may comprise consolidation locations which are excluded from the availability check, for example if a consolidation location is closed for maintenance or unavailable because of natural disasters. For such consolidation locations a plurality of validity periods may be defined which define the validity of the exclusion. This means that these consolidation locations are valid beyond these periods and therefore not excluded completely from the availability check. On the other hand, alternative consolidation locations may be defined for excluded consolidation locations. It may be also possible that a consolidation location is overridden by an external consolidation location.

If after the availability check still a remaining open quantity exists, which is checked in step 404, then the method returns to step 402 by determining and evaluating the next ATP rule. If the complete ordered quantity is confirmed by the availability check, the method continues with step 405, which performs a result correlation, if necessary. Continuing with the next step 406, the method creates a plurality of stock transfer orders between the product locations and the consolidation locations. After this, the process ends by delivering the ordered products from the consolidation location to the customer.

The present techniques can be implemented in digital electronic circuitry, or in computer hardware, firmware, software, or in combinations of them. Apparatus of the invention can be implemented in a computer program product tangibly embodied in a machine-readable storage device for execution by a programmable processor. Method steps according to the invention can be performed by a programmable processor executing a program of instructions to perform functions of the invention by operating on the basis of input data, and by generating output data. The invention may be implemented in one or several computer programs that are executable in a programmable system, which includes at least one programmable processor coupled to receive data from, and transmit data to, a storage system, at least one input device, and at least one output device, respectively. Computer programs may be implemented in a high-level or object-oriented programming language, and/or in assembly or machine code. The language or code can be a compiled or interpreted language or code. Processors may include general and special purpose microprocessors. A processor receives instructions and data from memories, in particular from read-only memories and/ or random access memories. A computer may include one or more mass storage devices for storing data; such devices may include magnetic disks, such as internal hard disks and removable disks; magneto-optical disks; and optical disks. Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and CD-ROM disks. Any of the foregoing can be supplemented by or incorporated in ASICs (application-specific integrated circuits).

The computer systems or distributed computer networks as mentioned above may be used, for example, for producing goods, delivering parts for assembling products, controlling technical or economical processes, or implementing telecommunication activities.

To provide for interaction with a user, the invention can be implemented on a computer system having a display device such as a monitor or LCD screen for displaying information to the user and a keyboard and a pointing device such as a mouse or a trackball by which the user can provide input to the computer system. The computer system can be programmed to provide a graphical or text user interface through which computer programs interact with users.

A computer may include a processor, memory coupled to the processor, a hard drive controller, a video controller and an input/output controller coupled to the processor by a processor bus. The hard drive controller is coupled to a hard disk drive suitable for storing executable computer programs, including programs embodying the present technique. The I/O controller is coupled by means of an I/O bus to an I/O interface. The I/O interface receives and transmits in analogue or digital form over at least one communication link. Such a communication link may be a serial link, a parallel link, local area network, or wireless link (e.g. an RF communication link). A display is coupled to an interface, which is coupled to an I/O bus. A keyboard and pointing device are also coupled to the I/O bus. Alternatively, separate buses may be used for the keyboard pointing device and I/O interface.

In the foregoing specification, the invention has been described with reference to specific embodiments thereof. It will, however, be evident that various modifications and changes can be made thereto without departing from the broader spirit and scope of the invention as set forth in the appended claims. The specification and drawings are, accordingly, to be regarded in an illustrative rather than a restrictive sense.

## Claims

1. A computer-implemented method for managing the delivery of ordered products from at least one supplier location to a customer via at least one consolidation location with a supply chain management system, whereby availability of the ordered products is checked based on a plurality of ATP rules, the ATP rules comprising the at least one supplier location which is to be checked for availability of the ordered products, wherein at least one ATP rule further defines the at least one consolidation location, and whereby the at least one consolidation location is selected from the at least one ATP rule and checked for availability of the ordered products.

2. The computer-implemented method of claim 1, wherein the ATP rules further comprise at least one consolidation location which is excluded from the availability check.

3. The computer-implemented method of claim 2, wherein the at least one excluded consolidation location has a plurality of validity periods which define the validity of the exclusion.

4. The computer-implemented method of claim 2, wherein the ATP rules further comprise at least one alternative consolidation location with respect to at least one excluded consolidation location.

5. The computer-implemented method of claim 1, wherein the selected at least one consolidation location is replaced an externally specified consolidation location.

6. The computer-implemented method of claim 1, wherein the ATP rules further comprise alternative products for the ordered products.

7. The computer-implemented method of claim 1, wherein the ATP rules further comprise a result correlation flag indicating as to whether or not a delivery date correlation of the products to be delivered from the at least one consolidation location to the customer is to be performed at the at least one consolidation location.

8. The computer-implemented method of claim 7, further comprising:
a step of determining at least one ATP rule out of the plurality of ATP rules;
a step of performing an availability check according to the determined at least one ATP rule.

9. The computer-implemented method of claim 8, further comprising:
a step of creating at least one stock transfer order which triggers transfer of the products from the at least one supplier location to the at least one consolidation location; and
a step of performing a delivery date correlation at the at least one consolidation location.

10. The computer-implemented method of claim 9, wherein the step of determining the at least one ATP rule is performed based on a set of definable parameters.

11. The computer-implemented method of claim 10, wherein the step of performing an availability check comprises:
a sub-step of performing an availability check according to the selected at least one consolidation location or according to the externally specified consolidation location;
a sub-step of performing a product replacement within the at least one consolidation location;
a sub-step of performing an availability check according to the at least one alternative consolidation location;
a sub-step of performing a product replacement at the at least one alternative consolidation location;
a sub-step of performing an availability check according to the supplier locations;
a sub-step of performing a product replacement within the supplier locations.

12. The computer-implemented method of claim 11, wherein the sub-step of performing an availability check according to the selected at least one consolidation locations or according to the external consolidation location is performed as first sub-step.

13. An apparatus for managing the delivery of ordered products comprising
a data storage device which stores a plurality of ATP rules, a plurality of supplier locations and a plurality of consolidation locations, whereby the ATP rules comprises the supplier locations to be checked for availability of the ordered products and at least one of the ATP rules defines at least one consolidation location to be checked for availability of the ordered products;
means for selecting the at least one consolidation location from the at least one ATP rule; and
means for performing an availability check.

14. A computer-readable medium comprising computer-executable instructions for performing the method according to claim 1, when loaded into a computer system.
